# EUROPEAN PATENT APPLICATION

(11) **EP 4 124 174 A1**
(43) Date of publication of application: **25.01.2023**
(21) Application number: 22185567.9
(22) Date of filing: 18.07.2022
(51) Int. Cl.: H05B 3/34, H05B 3/58, B64C 1/14, B64D 11/02

(54) **THIN-LIGHTWEIGHT-SMART HEATER FOR FREEZE PROTECTION OF AIRCRAFT WASTE FLUID SYSTEMS**

(30) Priority: 19.07.2021 IN 202141032413; 02.05.2022 US 202217734980
(71) Applicant: B/E Aerospace, Inc., Winston-Salem, NC 27105 (US)
(72) Inventor: HIREMATH, Manjunath, 560073 Bangalore (IN); PATIL, Rhushikesh, 560043 Bangalore (IN); BAMBILA, Gururaja, 560066 Bangalore (IN); BAGEWADI, Nitin Kumar, 560066 Bangalore (IN)
(74) Representative: Dehns

(57) **Abstract**

A self-regulating heater (200) may comprise a first substrate (202) including a first silicone layer (212a) and a first polyimide layer (214a). A positive temperature coefficient heating element may be formed over the first polyimide layer (214a). A second substrate (206) may be located over the positive temperature coefficient heating element. The second substrate (206) may include a second silicone layer (212b) and a second polyimide layer (214b).

## Description

### CROSS-REFERENCE TO RELATED APPLICATIONS

This application claims priority to, and the benefit of, India Patent Application No. 202141032413, filed July 19, 2021, and titled "THIN-LIGHTWEIGHT-SMART HEATER FOR FREEZE PROTECTION OF AIRCRAFT WASTE FLUID SYSTEMS," which is incorporated by reference herein in its entirety for all purposes.

### FIELD

The present disclosure relates to aircraft systems, and more specifically, to heaters for freeze protection of aircraft waste water systems.

### BACKGROUND

Water-based waste from aircraft lavatories is generally flowed from the source (e.g., lavatory sink or toilet) to a waste tank. To prevent freezing of the water-based waste, heaters are incorporated along the aircraft plumbing (e.g., along the exterior surfaces of the pipes, fittings, tanks, etc.). Current wastewater heating systems generally include a wound wire heating element embedded between two substrate layers, temperature controllers configured to control power (e.g., current) to the wire, sensors that provide temperature measurements to the controller, and one or more thermal fuses configured to prevent overheating. The controllers and sensors increase the weight, part count, and cost associated with the heating system. For example, some current heating systems may include 12 or more controllers. Further, the wound wire heating element is cumbersome to install and is susceptible to breakage, which can result in failure of the entire heating system. Additionally, most thermal fuses are one-time use devices. In other words, once a fuse is spent, it must be replaced in order to close the circuit, and replacing fuses often involves removing a component from its installed location in order to mount a new fuse.

### SUMMARY

A self-regulating heater is disclosed herein. In accordance with various embodiments, the self-regulating heater may comprise a first substrate including a first silicone layer and a first polyimide layer. A positive temperature coefficient heating element may be formed over the first polyimide layer. A second substrate may be located over the positive temperature coefficient heating element. The second substrate may include a second silicone layer and a second polyimide layer.

In various embodiments, the positive temperature coefficient heating element may comprise a positive temperature coefficient ink. In various embodiments, the positive temperature coefficient ink may comprise conductive particles distributed in an organic crystalline matrix. In various embodiments, the conductive particles comprise carbon black.

In various embodiments, a dielectric adhesive may be deposited between the first polyimide layer and the positive temperature coefficient ink. In various embodiments, a dielectric adhesive may be deposited between the second polyimide layer and the positive temperature coefficient ink.

In various embodiments, the first silicone layer and the second silicone layer may form an exterior surface of the self-regulating heater. In various embodiments, the first substrate may have a thickness of between 0.0065 inches and 0.0085 inches, and the positive temperature coefficient heating element may have a thickness of between 0.015 inches and 0.025 inches.

An aircraft wastewater system is also disclosed herein. In accordance with various embodiments, the aircraft wastewater system may comprise a waste tank, a conduit fluidly connected to the conduit, and a self-regulating heater coupled to an exterior surface of at least one of the waste tank or the conduit. The self-regulating heater may include a first substrate including a first silicone layer and a first polyimide layer, a positive temperature coefficient heating element formed over the first polyimide layer, and a second substrate located over the positive temperature coefficient heating element. The second substrate may include a second silicone layer and a second polyimide layer.

In various embodiments, the first silicone layer may contact the exterior surface of the at least one of the waste tank or the conduit. In various embodiments, the positive temperature coefficient heating element may comprise a positive temperature coefficient ink. In various embodiments, the positive temperature coefficient ink may have an equilibrium temperature between 15° Celsius and 40° Celsius.

In various embodiments, the positive temperature coefficient ink may comprise conductive particles distributed in an organic crystalline matrix. In various embodiments, the organic crystalline matrix may be formed directly on the first polyimide layer.

A method of making a heating system for an aircraft wastewater system is also disclosed herein. In accordance with various embodiments, the method may comprise forming a positive temperature coefficient heating element over a first substrate, locating a second substrate over the positive temperature coefficient heating element, and curing the first substrate and the second substrate. The first substrate may include a first polyimide layer and a first silicone layer. The second substrate may include a second polyimide layer and a second silicone layer.

In various embodiments, the method may further comprise coupling the first substrate to a component of the aircraft wastewater system. In various embodiments, coupling the first substrate to the component may comprise conforming a shape of the first substrate and the second substrate to a radius of curvature of the component.

In various embodiments, forming the positive temperature coefficient heating element may comprise forming a first electrode over the first polyimide layer, forming a second electrode over the first polyimide layer and spaced apart from the first electrode, and depositing a positive temperature coefficient ink over the first polyimide layer and between the first electrode and the second electrode.

In various embodiments, the method may further comprise depositing a dielectric adhesive over the first polyimide layer prior to depositing the positive temperature coefficient ink.

In various embodiments, the method may further comprise depositing a dielectric adhesive over the positive temperature coefficient ink.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates an aircraft, in accordance with various embodiments;
FIG. 2 illustrates an aircraft wastewater system having self-regulating heaters, in accordance with various embodiments;
FIG. 3A illustrates a partial cutaway plan view of a self-regulating heater, in accordance with various embodiments;
FIG. 3B illustrates a cross-section view of a self-regulating heater taken along the line 3B-3B of FIG. 3A, in accordance with various embodiments;
FIGs. 4A and 4B illustrate details of the PTC ink resistor in the circle labeled 4A/4B in FIG. 3A, in accordance with various embodiments; and
FIGs. 5A and 5B illustrate a method of making a heating system for an aircraft wastewater system, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure. Thus, the detailed description herein is presented for purposes of illustration only and not of limitation.

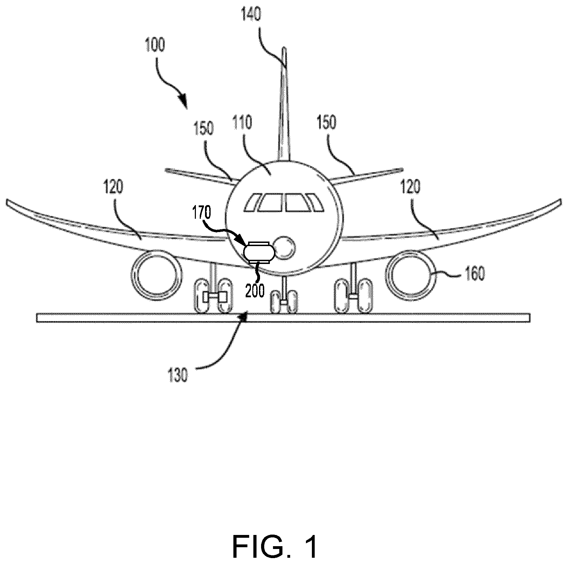

Referring now to FIG. 1, a front view of an aircraft 100 is illustrated in accordance with various embodiments. The aircraft 100 comprises a fuselage 110, wings 120 extending outward from the fuselage 110, a landing gear system 130, a vertical stabilizer 140, horizontal stabilizers 150 and engines 160. In various embodiments, fuselage 110 defines an aircraft cabin therein. In this regard, passengers may board the aircraft 100 and sit within the aircraft cabin during travel. The aircraft cabin includes at least one lavatory disposed therein. Aircraft 100 may have a wastewater system 170. As described in further detail below, self-regulating heaters 200 may be employed on one or more components of wastewater system 170 for freeze portion. In this regard, self-regulating heaters 200 may be employed to prevent, or reduce, occurrence of the waste liquid in component freezing. Although described herein with respect to wastewater systems, the present disclosure is not limited in this regard. For example, self-regulating heaters 200 may be employed on components of a potable water system or any other fluid systems located in non-pressurized zones of aircraft 100.

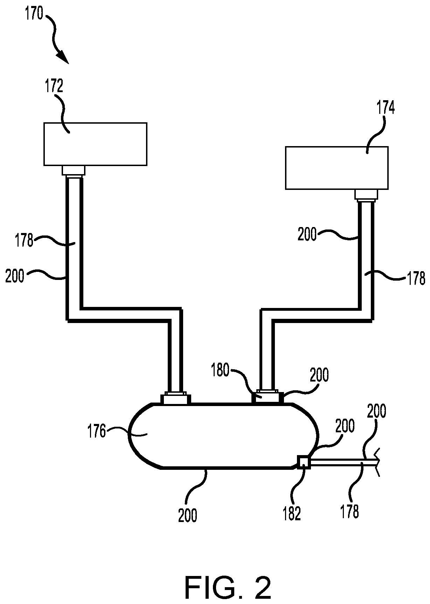

With reference to FIG. 2, wastewater system 170 is illustrated. In accordance with various embodiments, water, or other liquid waste, from sink 172 and toilet 174 may be deposited into waste tank 176 via conduits 178, and/or from waste tank 176 via conduits 178. In accordance with various embodiments, heaters 200, as described in further detail below, are coupled to the exterior surface of one or more components of wastewater system 170. For example, heaters 200 may be located around the exterior surface of conduits 178 and/or waste tank 176. Heaters 200 may also be located on the exterior surface of conduit fittings 180 and/or valves 182. Conduit fittings 180 may fluidly connect one or more conduits 178 to one another and/or to other components of wastewater system 170. In this regard, heaters 200 may be located on any surface where heating to avoid freezing of the wastewater in wastewater system 170 may be desired. Heaters 200 are flexible. In this regard, when coupling heaters 200 to a component (e.g., waste tank 176, conduit 178, conduit fitting(s) 180, and/or valve(s) 182) of wastewater system 170, heaters 200 may take the shape of the component. For example, heaters 200 may be conformable to a radius of curvature of the component.

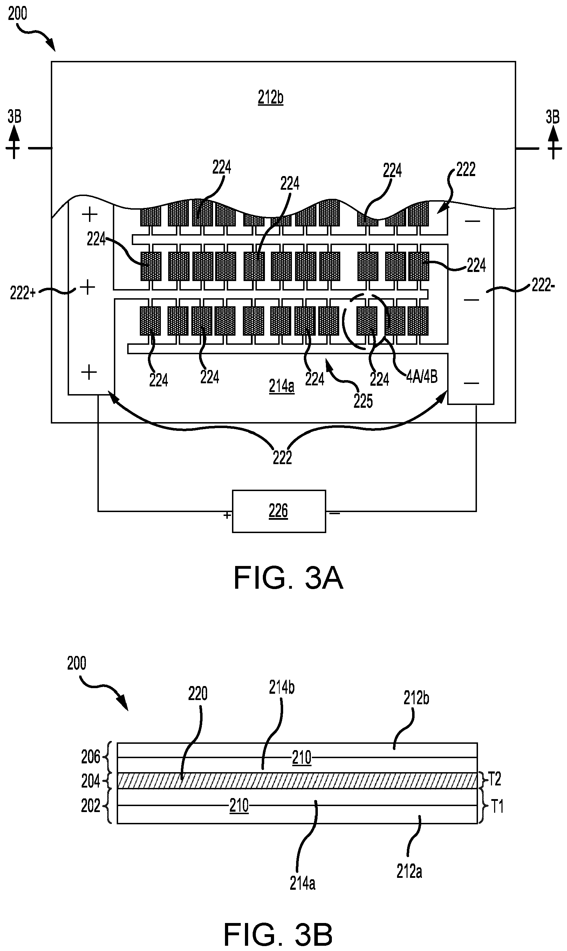

With reference to FIGs. 3A and 3B, additional details of a self-regulating heater 200 are illustrated. Heater 200 includes a first substrate 202, a heating element 204, and a second substrate 206. In FIG. 3A, a portion of second substrate 206 is removed to better illustrate heating element 204. In accordance with various embodiments, first substrate 202 and second substrate 206 may each comprise a silicone-polyimide material 210. For example, first substrate 202 and second substrate 206 may each be a silicone-polyimide sheet or silicone-polyimide tape. The silicone-polyimide material 210 includes a silicone layer and a polyimide layer. In this regard, first substrate 202 includes a first silicone layer 212a and a first polyimide layer 214a, and second substrate 206 includes a second silicone layer 212b and a second polyimide layer 214b. The first and second silicone layers 212a, 212b form the exterior surfaces of heater 200. The first and second polyimide layers 214a, 214b may be oriented toward and/or in contact with the heating element 204. Employing both silicone and polyimide in first and second substrates 202, 206 allows the substrates to have the dielectric property of polyimide and the flexibility (e.g. bendability) of silicone.

In accordance with various embodiments, heating element 204 is a positive temperature coefficient (PTC) heating element 220. For example, PTC heating element 220 may include electrodes 222 and a PTC ink 224 deposited (or printed) between electrode pairs (e.g., between the positive electrode 222⁺ and the negative electrode 222⁻). In this regard, electrodes 222 and PTC ink 224 form a circuit 225. Electrodes 222 may be electrically coupled to a power supply 226.

In accordance with various embodiments, PTC ink 224 is made from a material that increases in resistance in response to increased temperature. The increased resistance limits the current through circuit 225. Thus, PTC heating element 220 may stop producing heat, or reduce the amount of heat produced, once a threshold (or equilibrium) temperature is reached. Stopping, or limiting, heat production in response to reaching the equilibrium temperature tends to decrease the amount of power associated with operating heater 200. For example, in various embodiments, power supply 226 may supply 115 volts and PTC ink 224 may have a resistance of 132.25 Ohm at -40°C and a resistance of 15870 Ohm at the equilibrium temperature of the PTC ink 224. At -40°C, heater 200 uses approximately 100 watts of power and draws approximately 0.87 ampere of current; at the equilibrium temperature, heater 200 uses approximately 0.805 watts of power and draws approximately 0.007 ampere of current. As used in the previous context only, "approximately" mean ± 10% of the associated value.

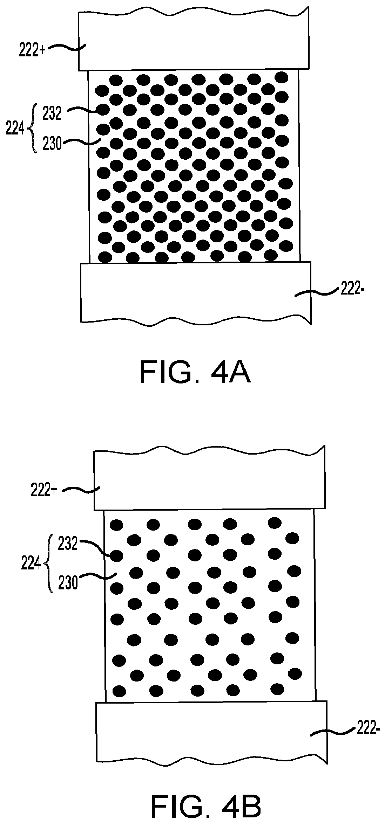

The PTC ink 224 (sometimes referred to as carbon resistor ink) may be made from a polymeric material. For example, and with reference to FIG. 4A, the PTC ink 224 may be made from an organic crystalline matrix material 230 having conductive particles 232 distributed therein. The organic crystalline polymeric matrix material 230 may include high density polyethylene, low density polyethylene, medium density polyethylene, copolymer of ethylene and acrylic acid, polypropylene, polyvinylidene fluoride, poly-1-butene, fluorinated ethylene/propylene copolymer, and the like. The conductive particles 232 may include carbon black, which is a form of paracrystalline carbon.

In various embodiments, the increase in resistance of the PTC ink 224 is caused, at least in part, by an increase in the temperature of the PTC ink 224. Stated differently, PTC ink 224 has a characteristic that the resistance value increases along with temperature elevation. Additionally, the resistance value increases abruptly (e.g., exponentially) when a certain temperature (e.g., the equilibrium temperature) is reached to conduct self-regulated temperature control. With additional reference to FIG. 4B, the self-regulated temperature control is developed by disconnection of the conductive path between electrodes 222⁺ and 222⁻ due cubical expansion of the crystalline polymeric matrix material 230 at elevated temperatures. The expansion of the crystalline polymeric matrix material 230 increases the distance between conductive particles 232, thereby increasing of the resistance of PTC ink 224. As long as the temperature remains elevated (e.g., above the equilibrium temperature), the PTC ink 224 maintains the greater resistance value. The resistance value can be subsequently decreased by cooling down the PTC ink 224, thereby decreasing the distance between the conductive particles 232 and "closing" the circuit 225.

Heater 200 being self-regulating also allows the controllers and/or the sensors and/or the thermal fuses, which are associated with traditional wastewater heating systems, to be eliminated. In this regard, heater 200 tends to reduce the weight, part count, and cost associated with heating wastewater system 170. In various embodiments, the equilibrium temperature of PTC ink 224 may be between 40° C and 45°C. In various embodiments, the equilibrium temperature of PTC ink 224 may be less than 40° C, as freezing can be avoided at lower temperatures. For example, in various embodiments, the equilibrium temperature of PTC ink 224 may be between 15° C and 40° C, or between 20° C and 30° C. It will be appreciated that the equilibrium temperature of PTC ink 224 may be selected based on the heat output associated with preventing the wastewater in the component to which heater 200 is coupled from freezing.

Returning to FIGs. 3A and 3B, electrodes 222 may be formed over the first polyimide layer 214a of first substrate 202 using evaporation, electrolytic plating, electro less plating, screen printing, or other suitable metal deposition process. PTC ink 224 may be deposited over the first polyimide layer 214a of first substrate 202 and between electrodes 222 using any suitable deposition process. Second substrate 206 is deposited over PTC heating element 220 with second polyimide layer 214b oriented toward PTC heating element 220 (i.e., with second silicone layer 212b oriented away from PTC heating element 220). While PTC ink 224 is illustrated as a plurality of squares, or rectangles, deposited between positive electrode 222⁺ and negative electrode 222⁻, it is contemplated and understood that PTC ink 224 may be deposited in any shape or pattern depending on the desired circuit design.

In various embodiments, a dielectric adhesive (sometimes referred to as a dielectric primer) may be deposited over electrodes 222 and the first polyimide layer 214a of first substrate 202 prior to depositing PTC ink 224. In various embodiments, the dielectric adhesive may also, or alternatively, be deposited over PTC ink 224, electrodes 222, and the first polyimide layer 214a of first substrate 202 after to depositing PTC ink 224. The dielectric adhesive provides a dielectric layer (e.g., an electrically insulating layer) between the PTC ink 224 and the first polyimide layer 214a of the first substrate 202 and/or between the PTC ink 224 and the second polyimide layer 214b of the second substrate 206. The dielectric adhesive may provide for better bonding (e.g., increased bonding strength) between the PTC ink 224 and the first substrate 202 and/or between the PTC ink 224 and the second substrate 206. The dielectric adhesive may comprise, for example, an isomer based organic solvent. A suitable dielectric adhesive is available under the trade name LOCTITE ^{®} NCI 9001 from Henkel Corporation of Düsseldorf, Germany.

In accordance with various embodiments, a thickness T1 of first substrate 202 may be between 0.006 inches and 0.010 inches, between 0.0065 inches and 0.0085 inches, between 0.007 inches and 0.0075 inches, and/or about 0.0071 inches (i.e., between 0.015 centimeters (cm) and 0.025 cm, between 0.017 cm and 0.0.22 cm, between 0.018 cm and 0.019 cm, and/or about 0.0018 cm). As used in the previous context only, the term "about" means ±0.0002 inches (±0.0005 cm). In accordance with various embodiments, first substrate 202 and second substrate 206 are formed of the same material and are approximately equal in thickness. As used in the previous context only, the term "approximately" means ±0.0002 inches (±0.0005 cm).

In accordance with various embodiments, a thickness T2 of heating element 204 (e.g., a combined thickness of electrodes 222 and PTC ink 224) is between 0.010 inches and 0.040 inches, between 0.015 inches and 0.025 inches, between 0.018 inches and 0.022, and/or about 0.020 inches (i.e., between 0.025 cm and 0.102 cm, between 0.038 cm and 0.064 cm, between 0.046 cm and 0.056 cm, and/or about 0.051 cm). In the previous context only, the term "about" means ±0.005 inches (±0.013 cm). Heater 200 may exhibit a reduction in thickness of approximately 63% and a reduction in weight of approximate 64% as compared to traditional wastewater heaters (e.g., as compared to a wastewater heater comprised of a wound wire heating element sandwiched between silicone substrates).

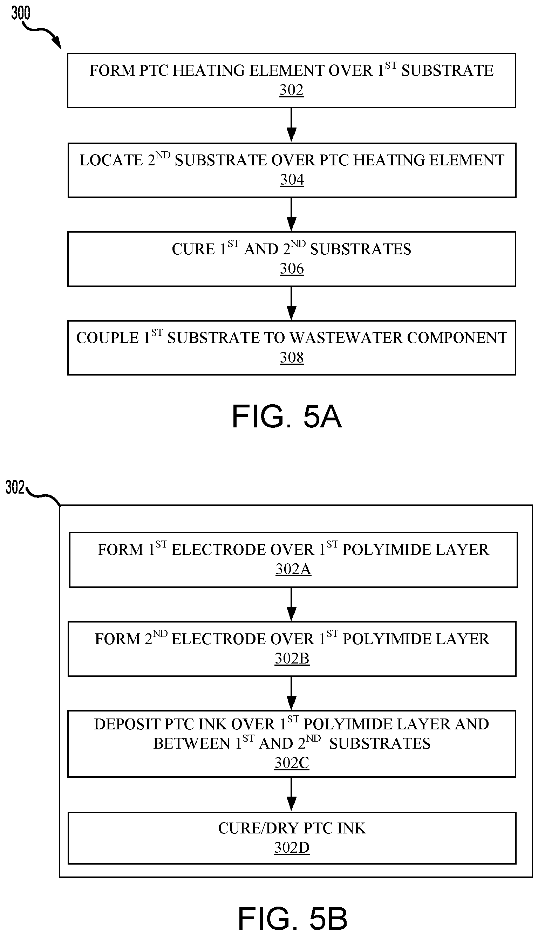

With reference to FIGs. 5A, a method 300 of making a heating system for an aircraft wastewater system is illustrated. In accordance with various embodiments, method 300 may comprise forming a PTC heating element over a first substrate (step 302), locating a second substrate over the PTC heating element (step 304), and curing the first substrate and the second substrate (step 306). The first and second substrates may each include a silicone layer and a polyimide layer.

In accordance with various embodiments, curing the first substrate and the second substrate may comprise pressing the first and second substrates together, while applying heat. For example, after step 304, the first and second substrates, with the PTC heating element located therebetween, may be placed in an autoclave for between 5 minutes and 3 hours with the pressure set at between approximately 200 kPa and approximately 586kPA and the temperature between approximately 80°C and 110°C, thereby bonding the first substrate and the second substrate together and vulcanizing the first and second silicone layers. As used in the previous context only, the term "approximately" means ±10% of the associated value.

In various embodiments, method 300 may further comprising coupling the first substrate to a component of the aircraft wastewater system (step 308). Step 308 may be performed after step 306 (i.e., after curing the first and second substrates). In various embodiments, step 308 may include conforming a shape of the first substrate and the second substrate to a radius of curvature of the exterior surface of the component. In various embodiments, the component may be at least one of a conduit, a waste tank, a conduit fitting, or a valve. In various embodiments, step 308 may include pressing the first substrate against the component while applying heat to form crosslink bonds between the first silicone layer and a material forming the exterior surface component. In various embodiments, step 308 may include applying a thermally conductive adhesive between the first silicone layer of the substrate and the exterior surface of the component.

With reference to FIG. 5B, in accordance with various embodiments, step 302 may comprise forming a first electrode over the first polyimide layer (step 302A), forming a second electrode over the first polyimide layer and spaced apart from the first electrode (step 302B), depositing a PTC ink over the first polyimide layer and between the first electrode and the second electrode (step 302C), and curing/drying PTC ink (step 302D). In accordance with various embodiments, step 302D may be performed after step 302C and prior to step 304. Step 302D may comprise a hot air curing. For example, air having a temperature of between approximately 80° and 100°C may be directed at the PTC ink for between 30 seconds and 5 minutes. As used in the previous context only, the term "approximately" means ±10% of the associated value. In various embodiments, step 302D may comprise heating the first substrate with the PTC ink deposited thereon in an oven set to a temperature of between approximately 80° and 100°C for between 30 seconds and 5 minutes. As used in the previous context only, the term "approximately" means ±10% of the associated value.

With combined reference to FIGs. 5A and 5B, in various embodiments, method 300 may further include depositing a dielectric adhesive over the first polyimide layer prior to depositing the PTC ink (i.e., prior to step 302C). In various embodiments, the dielectric adhesive may be deposited after step 302B and prior to step 302C. In various embodiments, method 300 may further include depositing a dielectric adhesive over cured/dried the PTC ink (i.e., after step 302D and prior to step 304).

With combined reference to FIGs. 3B and 5A, in various embodiments, step 302 may include forming PTC heating element 220 over first polyimide layer 214a of first substrate 202. Step 304 may include locating second substrate 206 over PTC heating element 220 with second polyimide layer 214b oriented toward PTC heating element 220. In various embodiments, step 306 may include curing first substrate 202 and second substrate 206, thereby forming heater 200.

With combined reference to FIGs. 2, 3B and 5A, in various embodiments, step 308 may comprise coupling first substrate 202 to at exterior surface of at least one of waste tank 176, conduit 178, conduit fitting 180, or valve 182 aircraft wastewater system 170.

With combined reference to FIGs. 3A and FIG. 5B, in accordance with various embodiments, step 302A may comprise forming electrode 222⁺ over first polyimide layer 214a. Step 302B may include forming electrode 222⁻ over first polyimide layer 214a and spaced apart from electrode 222⁺. Step 302C may include depositing PTC ink 224 over first polyimide layer 214a and between electrode 222⁺ and electrode 222⁻. Step 302D may include curing/drying PTC ink 224.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different crosshatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises," "comprising," or any other variation thereof, are intended to cover a nonexclusive inclusion, such that a process, method, article, or apparatus that comprises a list of elements does not include only those elements but may include other elements not expressly listed or inherent to such process, method, article, or apparatus.

## Claims

1. A self-regulating heater, comprising:
a first substrate including a first silicone layer and a first polyimide layer;
a positive temperature coefficient heating element formed over the first polyimide layer; and
a second substrate located over the positive temperature coefficient heating element, the second substrate including a second silicone layer and a second polyimide layer.

2. The self-regulating heater of claim 1, wherein the positive temperature coefficient heating element comprises a positive temperature coefficient ink.

3. The self-regulating heater of claim 2, wherein the positive temperature coefficient ink comprises conductive particles distributed in an organic crystalline matrix.

4. The self-regulating heater of claim 3, wherein the conductive particles comprise carbon black.

5. The self-regulating heater any of claims 2 to 4, further comprising a dielectric adhesive deposited between the first polyimide layer and the positive temperature coefficient ink, and/or
the self-regulating heater further comprising a dielectric adhesive deposited between the second polyimide layer and the positive temperature coefficient ink.

6. The self-regulating heater of any preceding claim, wherein the first silicone layer and the second silicone layer form an exterior surface of the self-regulating heater, and/or
wherein the first substrate has a thickness of between 0.0065 inches and 0.0085 inches, and wherein the positive temperature coefficient heating element has a thickness of between 0.015 inches and 0.025 inches.

7. An aircraft wastewater system, comprising:
a waste tank;
a conduit fluidly connected to the conduit; and
the self-regulating heater of any preceding claim,
wherein the self-regulating heater is coupled to an exterior surface of at least one of the waste tank or the conduit.

8. The aircraft wastewater system of claim 7, wherein the first silicone layer contacts the exterior surface of the at least one of the waste tank or the conduit.

9. The aircraft wastewater system of claim 8 when dependent on any of claims 2 to 5, wherein the positive temperature coefficient ink has an equilibrium temperature between 15° Celsius and 40° Celsius.

10. The aircraft wastewater system of claim 9 when dependent on of claim 3, wherein the organic crystalline matrix is formed directly on the first polyimide layer.

11. A method of making a heating system for an aircraft wastewater system, the method comprising:
forming a positive temperature coefficient heating element over a first substrate, the first substrate including a first polyimide layer and a first silicone layer;
locating a second substrate over the positive temperature coefficient heating element, the second substrate including a second polyimide layer and a second silicone layer; and
curing the first substrate and the second substrate.

12. The method of claim 11, further comprising coupling the first substrate to a component of the aircraft wastewater system.

13. The method of claim 12, wherein coupling the first substrate to the component comprises conforming a shape of the first substrate and the second substrate to a radius of curvature of the component.

14. The method of claim 13, wherein forming the positive temperature coefficient heating element comprises:
forming a first electrode over the first polyimide layer;
forming a second electrode over the first polyimide layer and spaced apart from the first electrode; and
depositing a positive temperature coefficient ink over the first polyimide layer and between the first electrode and the second electrode.

15. The method of claim 14, further comprising depositing a dielectric adhesive over the first polyimide layer prior to depositing the positive temperature coefficient ink, and/or
the method further comprising depositing a dielectric adhesive over the positive temperature coefficient ink.
